# EUROPEAN PATENT APPLICATION

(11) **EP 4 478 521 A1**
(43) Date of publication of application: **18.12.2024**
(21) Application number: 23903808.6
(22) Date of filing: 22.11.2023
(51) Int. Cl.: H01M 50/531, B23K 31/02, B23K 101/36

(54) **ELECTRODE LEAD ALIGNMENT APPARATUS FOR BATTERY MANUFACTURING**

(30) Priority: 14.12.2022 KR 20220174352
(71) Applicant: LG Energy Solution Ltd., 07335 Seoul (KR)
(72) Inventor: KIM, Jae Woon, Daejeon 34122 (KR)
(74) Representative: Plasseraud IP
(86) International application number: PCT/KR2023/018917
(87) International publication number: WO 2024/128605

(57) **Abstract**

The present technology relates to an electrode lead alignment apparatus for manufacturing a battery, the electrode lead alignment apparatus including: an alignment support configured to place an electrode lead thereon; a first-direction movement guide configured to push the electrode lead on the alignment support in a first direction to align the electrode lead; a first-direction movement member configured to be moved by a set first-direction movement stroke in the first direction, and connected to the first-direction movement guide to move the first-direction movement guide in the first direction; and a first-direction movement guide backward movement device configured to move the first-direction movement guide backward in a direction opposite in a direction in which the first-direction movement member is moved forward, when the electrode lead is stopped due to completion of alignment of the electrode lead by the first-direction movement guide during forward movement of the first-direction movement member in the first direction.

## Description

### [Technical Field]

The present invention relates to an electrode lead alignment apparatus for manufacturing a battery, especially a secondary battery.

This application claims the benefit of priority based on Korean Patent Application No. 10-2022-0174352, filed on December 14, 2022, and the entire content of the Korean patent application is incorporated herein by reference.

### [Background Art]

Recently, chargeable and dischargeable secondary batteries have been widely used as energy sources of wireless mobile devices.

Secondary batteries have attracted attention not only as energy sources of portable devices such as cellular phones, laptop computers, and camcorders but also as energy sources of electric vehicles and hybrid electric vehicles suggested as solution to air pollution caused by existing gasoline vehicles, diesel vehicles, etc. using fossil fuels.

Generally, secondary batteries are classified into cylindrical or prismatic batteries in which an electrode assembly is embedded in a cylindrical or prismatic metal can, and pouch-type batteries in which an electrode assembly are embedded in a pouch-type case of an aluminum laminate sheet, according to the shape of a battery case.

An electrode assembly embedded in a battery case is a power generation device that includes a positive electrode, a negative electrode, and a separator interposed between the positive electrode and the negative electrode and that is capable of being charged and discharged. Electrode assemblies may be classified into jelly roll type electrode assemblies and stack type electrode assemblies.

Electrode tabs are provided at ends of electrodes (positive or negative electrodes) included in the electrode assembly, and electrode leads are provided and welded to the electrode tabs.

The electrode leads are aligned by an electrode lead alignment apparatus to be moved to predetermined welding positions to be welded with the electrode tabs, before the electrode leads are moved to the electrode tab.

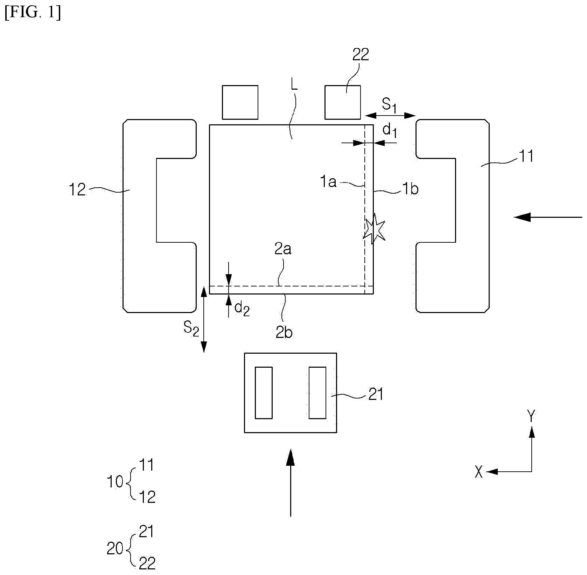

FIG. 1 is a schematic plan view illustrating a process of aligning electrode leads by an electrode lead alignment apparatus of the related art.

As shown in FIG. 1, an electrode lead L is aligned in two directions, i.e., an X-axis direction and a Y-axis direction. The electrode lead alignment apparatus includes an X-axis direction alignment device 10 and a Y-axis direction alignment device 20. The X-axis direction alignment device 10 includes a movement guide 11 that moves the electrode lead L in the X-axis direction and a fixing guide 12 disposed opposite to the movement guide 11 to support a side of the electrode lead L. The movement guide 11 and the fixing guide 12 support both sides of the electrode lead L in the X-axis direction to align the electrode lead L in the X-axis direction.

Similarly, the Y-axis direction alignment device 20 includes a movement guide 21 and a fixing guide 22 to align the electrode lead L in the Y-axis direction.

When the movement guide 11 of the X-axis direction alignment device 10 moves by a set movement stroke S₁, opposite ends of the movement guide 11 and the fixing guide 12 respectively support one side of the electrode lead L and another side thereof to complete alignment of the electrode lead L in the X-axis direction.

However, the electrode lead L inevitably has a tolerance in size during the manufacture thereof. When the size of the electrode lead L is uniform, the movement guide 11 will stop exactly while being in contact with one side of the electrode lead L (a right side of the electrode lead L indicated by a dotted line in FIG. 1), when the alignment is completed.

However, actually, the electrode lead L has a product tolerance d₁, and for example, an electrode lead with a tolerance greater than a certain size is likely to be scratched or crumpled. That is, as shown in FIG. 1, when the movement guide 11 moves by the same set movement stroke S₁, a side of an electrode lead whose size is greater than or equal to the tolerance d₁ (the right side of the electrode lead L indicated by the solid line in FIG. 1) may be pressed and crumpled by the movement guide 11 or the electrode lead L may be scratched by an end of the movement guide 11.

Alternatively, even an electrode lead with little tolerance may be mispositioned on an alignment support, for example, when the electrode lead is adsorbed and transported by an adsorber. In this case, the electrode lead may be crumpled or scratches due to the movement guide.

This problem may occur not only in alignment in the X-axis direction but also in alignment in the Y-axis direction. That is, a size of the electrode lead L has not only a tolerance d₁ in the X-axis direction but also a tolerance d₂ in the Y-axis direction. Therefore, when the movement guide 21 in the Y-axis direction moves by a set movement stroke S₂, the electrode lead L with the tolerance d₂ may be damaged.

### [Related Art Literature]

### (Patent Document 1) Korean Laid-Open Patent Publication No. 10-2018-0112616

### [Disclosure]

### [Technical Problem]

To address the above-described problems, the present invention is directed to providing an electrode lead alignment apparatus that includes a backward movement device to handle a product tolerance during the alignment of electrodes.

In addition, the present invention is directed to providing an electrode lead alignment apparatus in which a movement guide that pushes an electrode lead to be aligned includes a guide roller to disperse surface pressure applied to the electrode lead during alignment to prevent damage to the electrode lead.

### [Technical Solution]

According to an aspect of the present invention, an electrode lead alignment apparatus for manufacturing a battery includes: an alignment support configured to place an electrode lead thereon; a first-direction movement guide configured to push the electrode lead on the alignment support in a first direction to align the electrode lead; a first-direction movement member configured to be moved by a set first-direction movement stroke in the first direction, and connected to the first-direction movement guide to move the first-direction movement guide in the first direction; and a first-direction movement guide backward movement device configured to move the first-direction movement guide backward in a direction opposite in a direction in which the first-direction movement member is moved forward, when the electrode lead is stopped due to completion of alignment of the electrode lead by the first-direction movement guide during forward movement of the first-direction movement member in the first direction.

A forward movement distance of the first-direction movement guide until the alignment of the electrode lead is completed may be equal to or less than the set first-direction movement stroke of the first-direction movement member.

The electrode lead alignment apparatus may further include a first-direction movement device configured to move in the first direction, and including a first movement block fixedly coupled to a lower portion of the first-direction movement member to move the first-direction movement member in the first direction.

The electrode lead alignment apparatus may further include a first guide block slidably coupled to a lower portion of the first movement block to guide movement of the first movement block in the first direction.

The first-direction movement guide backward movement device may include a first connection block configured to connect the first-direction movement guide and the first-direction movement member, in which one side of the first connection block may be fixedly coupled to the first-direction movement guide and another side thereof may be slidably coupled to the first-direction movement member.

The first-direction movement guide backward movement device may further include: a first connection shaft including one end fixedly coupled to one of the first-direction movement member and the first connection block and another end slidably coupled to the other, the first connection shaft extending in the first direction; and a first elastic member installed on an outer circumference of the first connection shaft, in which both ends of the first elastic member may be regulated by a side of the first-direction movement member and a side of the first connection block that are opposite to each other with the first connection shaft interposed therebetween.

The electrode lead alignment apparatus may further include a second guide block fixedly coupled to the first-direction movement member and slidably coupled to the first connection block to guide movement of the first connection block in the first direction.

The first-direction movement guide may include a first guide roller configured to rotate around a rotation axis and come into contact with the electrode lead to align the electrode lead in the first direction.

In another embodiment of the present invention, the electrode lead alignment apparatus may further include a second-direction movement guide configured to push the electrode lead on the alignment support in a second direction to align the electrode lead, and a second-direction movement member configured to be moved by a set second-direction movement stroke in a second direction, and connected to the second-direction movement guide to move the second-direction movement guide in the second direction.

In the other embodiment, the electrode lead alignment apparatus may further include a second-direction movement guide backward movement device configured to move the second-direction movement guide backward in a direction opposite in a direction in which the second-direction movement member is moved forward, when the electrode lead is stopped due to completion of alignment of the electrode lead by the second-direction movement guide during forward movement of the second-direction movement member in the second direction.

In this case, a forward movement distance of the second-direction movement guide until the alignment of the electrode lead is completed may be equal to or less than the set second-direction movement stroke of the second-direction movement member.

In the other embodiment, the electrode lead alignment apparatus may further include a second-direction movement device configured to be moved in the second direction, and including a second movement block fixedly coupled to a lower portion of the second-direction movement member to move the second-direction movement member in the second direction, and a third guide block slidably coupled to a lower portion of the second movement block to guide movement of the second movement block in the second direction.

The second-direction movement guide backward movement device may include a second connection block configured to connect the second-direction movement guide and the second-direction movement member, in which one side of the second connection block may be fixedly coupled to the second-direction movement guide and another side thereof may be slidably coupled to the second-direction movement member.

The second-direction movement guide backward movement device may further include a second connection shaft including one end fixedly coupled to one of the second-direction movement member and the second connection block and another end slidably coupled to the other, the second connection shaft extending in the second direction, and a second elastic member installed on an outer circumference of the second connection shaft, in which both ends of the second elastic member may be regulated by a side of the second-direction movement member and a side of the second connection block that are opposite to each other with the second connection shaft interposed therebetween.

The second-direction movement guide may include a second guide roller configured to rotate around the rotation axis and come into contact with the electrode lead to align the electrode lead in the second direction.

### [Advantageous Effects]

The present invention provides a backward movement device capable of being moved backward in a direction opposite to a direction of alignment when a movement guide is brought into contact with an electrode lead after the alignment of the electrode lead. Accordingly, even when the electrode lead has a tolerance, the movement guide may be moved backward to correspond to the tolerance by the backward movement device. Therefore, even in the case of an electrode lead with a large tolerance, the movement guide does not continuously push the electrode lead in the alignment direction, thus preventing the electrode lead from being crumpled or scratched.

In particular, the backward movement device may include an elastic member to smoothly absorb and buffer impact applied to the electrode lead during a backward movement.

In addition, a guide roller is provided to disperse surface pressure applied to the electrode lead during alignment and smoothly guide the electrode lead and thus damage to the electrode lead can be prevented more reliably.

### [Brief Description of the Drawings]

FIG. 1 is a schematic plan view illustrating a process of aligning an electrode lead by an electrode lead alignment apparatus of the related art.
FIG. 2 is a perspective view of an electrode lead alignment apparatus of a first embodiment.
FIGS. 3 and 4 are schematic diagrams illustrating a process of operating the electrode lead alignment apparatus of the first embodiment.
FIGS. 5 and 6 are schematic diagrams illustrating an electrode lead alignment process performed by the electrode lead alignment apparatus of the first embodiment.
FIGS. 7 to 9 are schematic diagrams illustrating a process of aligning an electrode lead with a tolerance by the electrode lead alignment apparatus of the first embodiment.
FIG. 10 is a side cross-sectional view of a Y-axis direction alignment device of the electrode lead alignment apparatus of the first embodiment.
FIG. 11 is a perspective view of an electrode lead alignment apparatus of a second embodiment.
FIG. 12 is a perspective view of an example of a guide roller included in the electrode lead alignment apparatus of the second embodiment.
FIGS. 13 to 15 are schematic diagrams illustrating a process of aligning an electrode lead by the electrode lead alignment apparatus of the second embodiment.
FIG. 16 is a side cross-sectional view of a Y-axis direction alignment device of the electrode lead alignment apparatus of the second embodiment.
FIG. 17 is a schematic perspective view of a modified example of a backward movement device of an electrode lead alignment apparatus of the present invention.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In the present specifications, it should be understood that when a component is referred to as being "on" another component, the component is on or below the other component.

An electrode lead alignment apparatus for manufacturing a battery according to the present invention includes an alignment support on which an electrode lead is placed and a first-direction alignment device for aligning the electrode lead in a first direction. The first direction should be understood as a direction along a plane of the alignment support. The first direction may be a forward and backward direction or a left and right direction, provided that the direction is a direction along the plane. Alternatively, the first direction may be a diagonal direction forming an angle with respect to the forward and backward direction or the left and right direction. That is, the first direction is an optimal direction aligned with an electrode tab so that the quality of welding may be improved in consideration of a process of welding with the electrode tab of a subsequent process.

In the present specification, when it is assumed for convenience of description that an alignment support is one plane, a forward and backward direction of the plane is referred to as an X-axis direction, and a left and right direction of the plane is referred to as a Y-axis direction. The first direction may be the X-axis direction or the Y-axis direction.

An electrode lead alignment apparatus of an embodiment of the present invention may further include a second-direction alignment device in addition to the first-direction alignment device. For example, the second direction may be a direction perpendicular to the first direction. When the first direction is the X-axis direction, the second direction may be the Y-axis direction. Conversely, when the first direction is the Y-axis direction, the second direction may be the X-axis direction.

The first-direction alignment device includes a first-direction movement guide that aligns an electrode lead on the alignment support in the first direction, a first-direction movement member connected to the first-direction movement guide to move the first-direction movement guide in the first direction, and a first-direction movement guide backward movement device that moves the first-direction movement guide backward. An alignment apparatus of the present invention includes the first-direction movement guide backward movement device that is operated when the electrode lead is stopped after the alignment of the electrode lead by the first-direction movement guide. The electrode lead is not pressurized by the first-direction movement guide as the first-direction movement guide backward movement device moves the first-direction movement guide backward in a direction opposite to a direction of a forward movement of the first-direction movement member. Accordingly, the electrode lead can be prevented from being damaged. When the electrode lead has a tolerance larger than a certain size, the first-direction movement guide is moved backward by the first-direction movement guide backward movement device. In this case, the first-direction movement guide backward movement device may include an elastic member such as a spring. The elastic member gently absorbs pressure applied in a direction of backward movement of the electrode lead. In this case, the elastic member functions as a cushion.

The backward movement device applies a backward movement margin corresponding to the tolerance of the electrode lead. Therefore, damage to the electrode lead can be prevented despite the tolerance of the electrode lead.

In an alignment apparatus of an embodiment of the present invention, a first guide roller that rotates around a rotation axis is included in the first-direction movement guide. The first guide roller may come into contact with the electrode lead to align the electrode lead in the first direction. In this case, all sides of the first-direction movement guide may not be in contact with sides of the electrode lead but only the first guide roller may be in contact with a side of the electrode lead. That is, the electrode lead may be aligned by allowing only the first guide roller to be in point contact with the electrode lead rather than allowing all sides of a movement guide to be in surface contact with the electrode lead. Accordingly, surface pressure applied to the electrode lead may be dispersed to more reliably prevent damage to the electrode lead.

As described above, an alignment apparatus according to an example embodiment of the present invention may handle a size tolerance of an electrode lead by a first-direction movement guide backward movement device and disperse surface pressure applied to the electrode lead by a first guide roller to reliably prevent damage to the electrode lead.

The electrode lead alignment apparatus of the present invention may also include a second-direction alignment device. For example, when the first-direction alignment device aligns the electrode lead in the left and right direction, the second-direction alignment device may align the electrode lead in the forward and backward direction.

The second-direction alignment device may include a second-direction movement guide that moves along the second direction and a fixed guide installed opposite to the movement guide, as in the related art.

In an embodiment of the present invention, the second-direction alignment device may include a second-direction movement guide and a second-direction movement member that moves the second-direction movement guide in the second direction, similar to the first-direction alignment device.

The second-direction alignment device may further include a second-direction movement guide backward movement device to move the second-direction movement guide backward in a direction opposite to a direction of a forward movement of the second-direction movement member. The second-direction movement guide may include a second guide roller that rotates around the rotation axis and comes into contact with the electrode lead to align the electrode lead in the second direction. Accordingly, the second-direction alignment device may also reliably prevent damage to a corresponding side of the electrode lead.

Operations and effects according to various embodiments of the present invention will be summarized below.

### [1] When a first-direction alignment device includes a first-direction movement guide backward movement device

For example, when the first direction is the X-axis direction and the second direction is the Y-axis direction, the first-direction alignment device pushes an electrode lead in the X-axis direction to align the electrode lead in the X-axis direction. The electrode lead may be stopped by a support block, a first-direction fixing guide or the like. When the electrode lead is stopped while being inserted between the first-direction movement guide and the first-direction fixing guide, the electrode lead is aligned in the first direction. However, despite the alignment of the electrode lead, the first-direction movement member may continuously moves forward until a set first-direction movement stroke is reached. Initially, the first-direction movement stroke of the first-direction movement member is set to be equal to or greater than a forward movement distance of the first-direction movement guide until the alignment of the electrode lead is completed, in consideration of a tolerance of the electrode lead. That is, the forward movement distance of the first-direction movement guide is equal to or less than the set first-direction movement stroke of the first-direction movement member. Therefore, the first-direction movement member continuously moves forward, even when the first-direction movement guide moves by the forward movement distance and the alignment of the electrode lead is completed by supporting the electrode lead between it and the first-direction fixing guide. In this case, pressure is applied to the first-direction movement guide connected to the first-direction movement member from a side of the electrode lead in contact with the first-direction movement guide (a first side of the electrode lead perpendicular to the X-axis direction). It should be understood to mean that pressure is also applied to the electrode lead from the first-direction movement guide. When the first-direction movement guide backward movement device is not provided, the first side of the electrode lead may be bent or scratched due to the applied pressure. However, according to the present invention, the first-direction movement guide backward movement device moves the first-direction movement guide backward. Therefore, the pressure applied to the electrode lead may be canceled. In this case, the elastic member included in the first-direction movement guide backward movement device may function as a buffer member or cushion that absorbs the applied pressure.

### [2] When the first-direction alignment device further includes a first guide roller

When the first-direction movement guide includes a first guide roller, surface pressure applied to the electrode lead may be dispersed to prevent damage to the electrode lead as described above. When first, the first-direction alignment device aligns the electrode lead in the first direction, the first side of the electrode lead is protected by the first-direction movement guide backward movement device and the first guide roller. When an alignment apparatus of the present invention includes a second-direction alignment device of the related art, a second-direction movement guide of the second-direction alignment device may push a second side (a second side perpendicular to the Y-axis direction) of the electrode lead to align the electrode lead in the second-direction. In this case, the first guide roller of the first-direction alignment device gently supports the first side of the electrode lead while rotating. Therefore, surface pressure applied to the first side of the electrode lead is dispersed even during alignment in the second direction, thus protecting the first side.

Meanwhile, the second-direction alignment device may first align the electrode lead in the second direction, and thereafter, the first-direction alignment device may align the electrode lead in the first direction. In this case, the first-direction movement guide backward movement device may correspond to a size tolerance of the electrode lead in the X-axis direction as described above. In addition, because the first guide roller of the first-direction movement guide is in point contact with the first side of the electrode lead, surface pressure applied to the first side may be dispersed to prevent damage to the electrode lead.

### [3] When the second-direction alignment device includes a second-direction movement guide backward movement device and/or a second guide roller

When the second-direction alignment device includes a second-direction movement guide backward movement device, a size tolerance of the electrode lead in the second direction may also be handled. That is, when the electrode lead is aligned in the second direction (the Y-axis direction) by the second-direction movement guide, the second-direction movement guide may be moved backward in response to a size tolerance of the electrode lead in the Y-axis direction, thereby eliminating pressure applied to the second side of the electrode lead. When the second-direction movement guide includes a second guide roller, the second side of the electrode lead and the second guide roller may be brought into surface contact with each other to disperse surface pressure, thereby preventing damage to the second side of the electrode lead.

In this case, the electrode lead may be first aligned in the first direction or the second direction. Regardless of whether the electrode lead is first aligned in the first direction or the second direction, damage to the first side and/or the second side of the electrode lead may be prevented by the first-direction movement guide backward movement device and/or the second-direction movement guide backward movement device.

In addition, regardless of whether the electrode lead is first aligned in the first direction or the second direction, pressure applied to the first side and/or the second side of the electrode lead may be dispersed to prevent damage to the electrode lead.

In particular, in an embodiment in which both the first-direction alignment device and the second-direction alignment device include a backward movement device and a guide roller, the electrode lead may be simultaneously aligned in the first direction and the second direction. Even when the first-direction movement guide and the second-direction movement guide simultaneously push the electrode lead in the first direction and the second direction, the first guide roller and the second guide roller may disperse surface pressure applied to the electrode lead while rotating. In addition, because the first-direction movement guide backward movement device and the second-direction movement guide backward movement device respectively move the first-direction movement guide and the second-direction movement guide backward, these movement guides no longer press the electrode lead in a forward direction at alignment positions of the electrode lead in the first direction and the second direction. That is, forward movement distances of the first-direction movement guide and the second-direction movement guide are limited. Thereafter, as the firs-direction movement member and/or the second-direction movement member continuously move forward, the first-direction movement guide and/or the second-direction movement guide are moved backward to absorb an X-axis (first-direction) tolerance and a Y-axis (second-direction) tolerance of the electrode lead, thereby effectively protecting the first and second sides of the electrode lead.

Hereinafter, embodiments of the present disclosure will be described in detail with reference to the accompanying drawings.

### [Embodiments of the Present Invention]

### (First Embodiment)

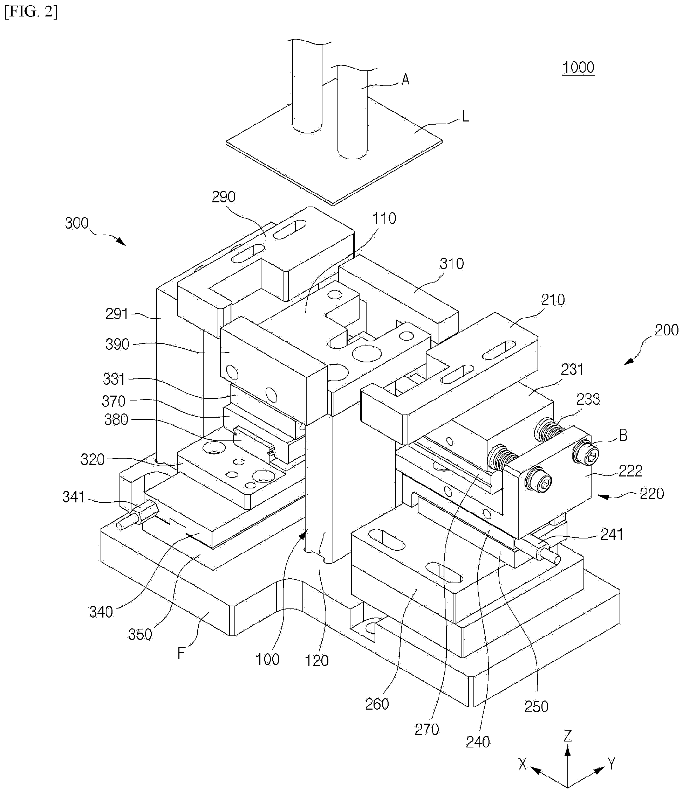

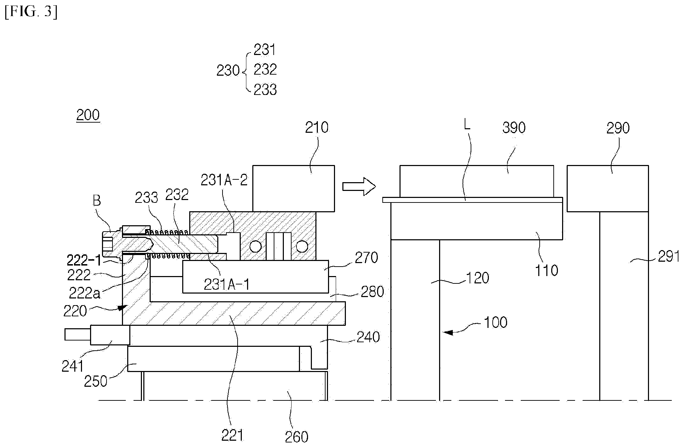

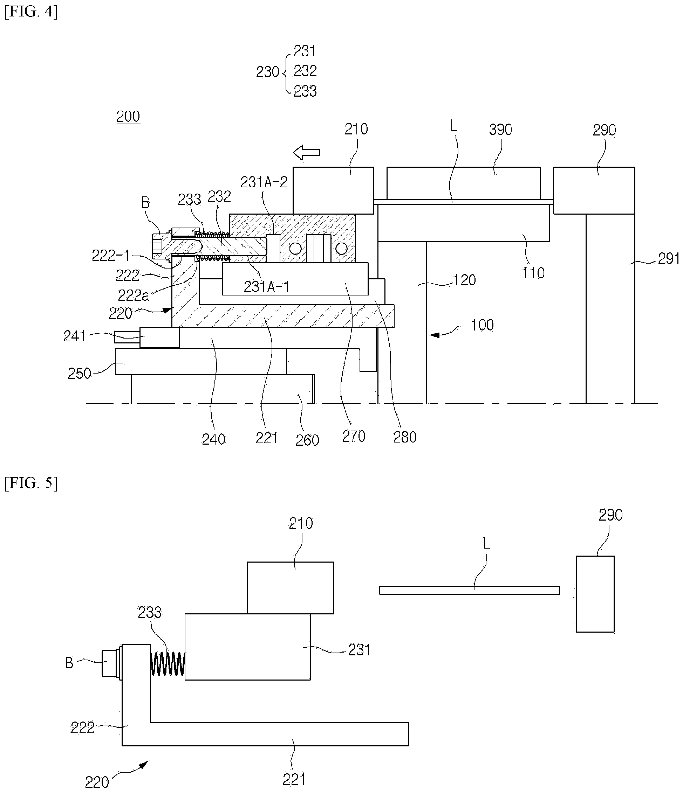

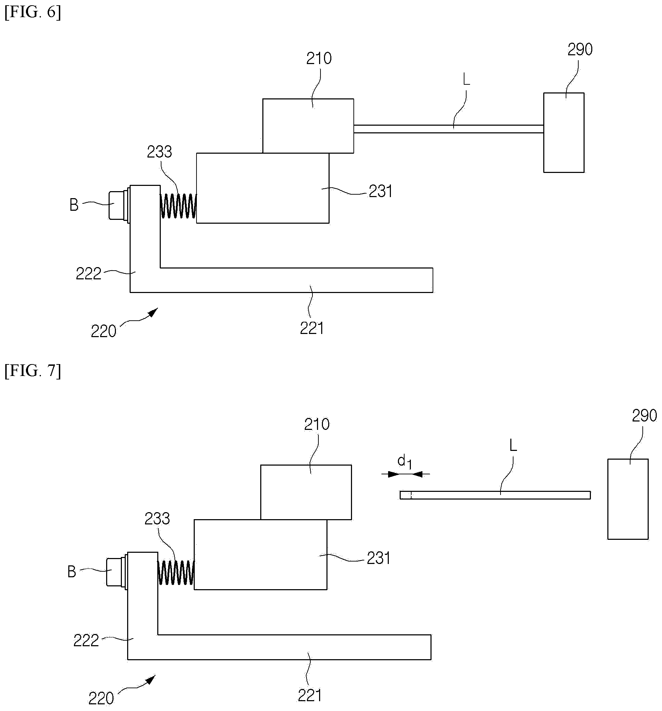

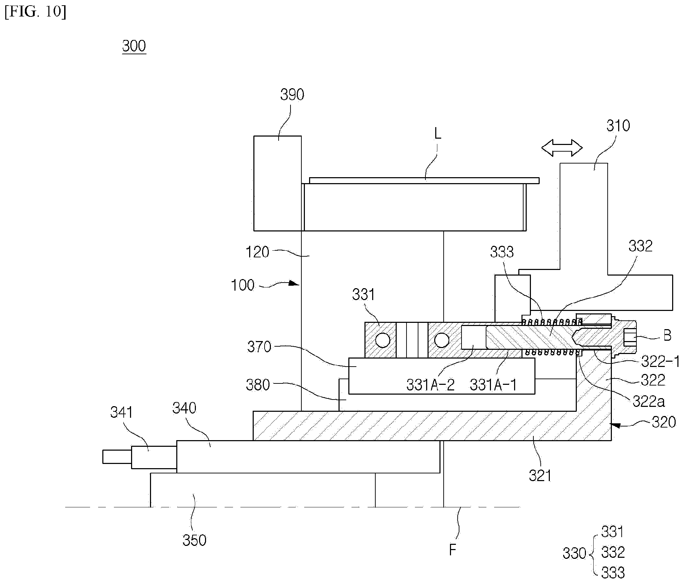

FIG. 2 is a perspective view of an electrode lead alignment apparatus of a first embodiment. FIGS. 3 and 4 are schematic diagrams illustrating a process of operating the electrode lead alignment apparatus of the first embodiment. FIGS. 5 and 6 are schematic diagrams illustrating an electrode lead alignment process performed by the electrode lead alignment apparatus of the first embodiment. FIGS. 7 to 9 are schematic diagrams illustrating a process of aligning an electrode lead with a tolerance by the electrode lead alignment apparatus of the first embodiment. FIG. 10 is a side cross-sectional view of a Y-axis direction alignment device of the electrode lead alignment apparatus of the first embodiment.

As shown in FIG. 2, the electrode lead alignment apparatus 1000 for manufacturing a battery according to the first embodiment includes an alignment support 100, a first-direction movement guide 210, a first-direction movement member 220, and a first-direction movement guide backward movement device 230.

The alignment support 100 is a place on which the electrode lead L is mounted, and an electrode lead L is aligned on the alignment support 100 in a first direction and/or a second direction. Referring to FIGS. 2 and 3, the alignment support 100 includes an alignment support part 110 extending horizontally and a support frame 120 coupled to a lower portion of the alignment support part 110. The alignment support part 110 has an area sufficient to stably support the electrode lead L. For example, even when the electrode lead L is displaced about an X-axis or Y-axis and thus supported while being inserted between a movement guide and a fixing guide, the alignment support part 110 may have an area (size) sufficient to stably support a most part of the lower portion of the electrode lead L.

The alignment apparatus 1000 of the present embodiment may further include a base frame F configured to support the alignment support 100. The alignment support 100 is firmly fixed to the base frame F. Various components of a first-direction alignment device 200 and a second-direction alignment device 300 may be installed on the base frame F. In addition, other components necessary for alignment may be installed on the base frame F. The alignment apparatus 1000 may be configured compactly by densely arranging the components for alignment on the base frame F.

The alignment apparatus 1000 of the present embodiment includes the first-direction alignment device 200 and the second-direction alignment device 300. In the present embodiment, the first direction is the X-axis direction that is a left and right direction, and the second direction is the Y-axis direction that is a forward and backward direction. Alternatively, the first direction may be set to be the Y-axis direction and the second direction may be set to be the Y-axis direction.

All of the first-direction movement guide 210, the first-direction movement member 220, and the first-direction movement guide backward movement device 230 described above are components of the first-direction alignment device 200.

The first-direction movement guide 210 pushes the electrode lead L on the alignment support 100 in the X-axis direction to align the electrode lead L. As shown in FIG. 2, the first-direction movement guide 210 moves forward from right to left to move the electrode lead L. A right side (first side) of the electrode lead L is pushed against an end of the first-direction movement guide 210 to be moved to the left.

The first-direction alignment device 200 includes a first-direction fixing guide 290. The first-direction fixing guide 290 is installed opposite to the first-direction movement guide 210 along the X-axis direction with the alignment support 100 interposed therebetween. The first-direction fixing guide 290 supports the electrode lead L to be moved by the first-direction movement guide 210 to align the electrode lead L together with the first-direction movement guide 210. The first-direction fixing guide 290 may be positioned at a certain height while being coupled to a guide support frame 291. The guide support frame 291 is coupled to the base frame F.

The first-direction movement member 220 is provided to move the first-direction movement guide 210. The first-direction movement member 220 moves along the first direction by a set first-direction movement stroke, and is connected to the first-direction movement guide 210 to move the first-direction movement guide 210 along the first direction. The first-direction alignment device 200 may include a first-direction movement device to move the first-direction movement member 220. A well-known linear movement device for linearly moving the first-direction movement member 220 in the first direction may be employed as the first-direction movement device. In the present embodiment, the linear movement device includes a driving source such as a motor, which is not shown, a first cylinder 241 connected to the driving source, and a first movement block 240 coupled to the first cylinder 241. The first movement block 240 may be moved forward or backward in the X-axis direction according to a movement of the first cylinder 241. The first-direction movement member 220 is fixedly coupled to an upper portion of the first movement block 240. Therefore, the first-direction movement member 220 is moved forward or backward in the X-axis direction according to the movement of the first movement block 240 fixedly coupled to the lower portion of the first-direction movement member 220.

To guide the movement of the first movement block 240, a first guide block 250 may be coupled to a lower portion of the first movement block 240. The first guide block 250 may be coupled to the base frame F directly or through another member. In the present embodiment, the first guide block 250 is coupled to the support block 260, and the support block 260 is coupled to the base frame F. The first guide block 250 may include a guide rail on an upper surface thereof. A lower surface of the first movement block 240 may be provided with a guide rail groove which the guide rail is hooked by and fitted in. A guide device using the guide rail and the guide rail groove is known and thus is not additionally described here. As described above, the first movement block 240 may be flexibly guided by the first guide block 250 in the first direction and thus the first-direction movement member 220 coupled to the first movement block 240 may also be flexibly moved forward and backward (reciprocating movement) by a set first-direction movement stroke.

The first-direction movement member 220 is connected to the first-direction movement guide 210. Therefore, the first-direction movement guide 210 is moved together with the movement of the first-direction movement member 220 in the first direction.

A first connection block 231 is provided to connect the first-direction movement member 220 and the first-direction movement guide 210. The first connection block 231 is a component of the first-direction movement guide backward movement device 230 to be described below. A side (upper surface) of the first connection block 231 is fixedly coupled to the first-direction movement guide 210. Another side (lower surface) of the first connection block 231 is slidably connected to the first-direction movement member 22.

Because the first connection block 231 is fixedly coupled to the first-direction movement guide 210, the first-direction movement guide 210 is moved together with the movement of the first connection block 231.

Meanwhile, the first connection block 231 is mounted on the upper surface of the first-direction movement member 220. The first connection block 231 may be directly mounted on the first-direction movement member 220. In this case, the guide rail groove and the guide rail described above may be provided on a lower portion of the first connection block 231 and the upper surface of the first-direction movement member 220, respectively.

Alternatively, as in the present embodiment, the first connection block 231 may be mounted on the first-direction movement member 220 through a certain connection member. The connection member includes a second guide block 280 fixedly coupled to the first-direction movement member 220. The second guide block 280 is slidably coupled to the lower surface of the first connection block 231. A sliding block 270 slidably coupled to the second guide block 280 may be provided under the first connection block 231. Accordingly, the sliding block 270 and the first connection block 231 may be guided by the second guide block 280 to be moved backward relative to the first-direction movement member 220.

The alignment apparatus 1000 of the present embodiment includes the first-direction movement guide backward movement device 230 for moving the first-direction movement guide 210 backward.

The first-direction movement guide backward movement device 230 does not move the first-direction movement guide 210 backward until the alignment of the electrode lead L is completed. The first-direction movement guide backward movement device 230 operates when the first-direction movement guide 210 moves forward in the X-axis direction and fixes the electrode lead L together with the first-direction fixing guide 290. That is, when the first-direction movement member 220 continuously moves forward even after the electrode lead L is stopped due to the alignment thereof by the first-direction movement guide 210 during the forward movement of the first-direction movement member 220 in the X-axis direction, the first-direction movement guide backward movement device 230 moves the first-direction movement guide 210 backward in a direction opposite to a direction in which the first-direction movement member 220 moves forward.

The first-direction movement guide backward movement device 230 according to the present embodiment will be described with reference to FIGS. 2 and 3 below.

As described above, the first-direction movement guide backward movement device 230 includes the first connection block 231 to connect the first-direction movement guide 210 and the first-direction movement member 220.

In addition, the first-direction movement guide backward movement device 230 further includes a first connection shaft 232 connecting the first-direction movement member 220 and the first connection block 231, and a first elastic member 233 wound around an outer circumference of the first connection shaft 232.

That is, the first-direction movement member 220 is slidably coupled to the first connection block 231 through the first connection shaft 232 while being slidably connected to the lower surface of the first connection block 231 with the second guide block 280 and the sliding block 270 that are interposed therebetween.

The first-direction movement member 220 may include a horizontal block 221 connected to the lower surface of the first connection block 231 and a vertical block 222 coupled to the first connection shaft 232. The second guide block 280 is fixedly coupled to an upper surface of the horizontal block 221, and the first connection block 231 is slidably coupled to an upper surface of the second guide block 280 with the sliding block 270 interposed therebetween.

One end of the first connection shaft 232 is fixedly coupled to the vertical block 222. Specifically, a through insertion hole 222-1 is formed in the vertical block 222, and a front end of the first connection shaft 232 is inserted into the through insertion hole 222-1. A fastening member B is fastened to the front end of the first connection shaft 232 from a side of the first connection shaft 232 opposite to the front end of the first connection shaft 232 to fixedly couple the first connection shaft 232 to the vertical block 222. For coupling with the fastening member B, a fastening member coupling hole may be provided in the front end of the first connection shaft 232. An insertion hole 231A-1 into which the first connection shaft 232 is inserted is provided in a side of the first connection block 231 facing the vertical block 222. Another end of the first connection shaft 232 is slidably coupled to the insertion hole 231A-1. The first connection shaft 232 extends between the vertical block 222 and the first connection block 231 to connect the vertical block 222 and the first connection block 231. The insertion hole 231A-1 in the first connection block 231 has a length sufficient for the first connection shaft 232 to slide therein. That is, the length of the insertion hole 231A-1 may be set such that the other end of the first connection shaft 232 does not come into contact with a bottom surface of the insertion hole 231A-1 even when the first connection shaft 232 slides into the insertion hole 231A-1. A lower portion of the insertion hole 231A-1 may be provided with a hole expanded diameter part 231A-2 with a diameter greater than a diameter of the first connection shaft 232. In the present embodiment, the first connection shaft 232 is fixedly coupled to the first-direction movement member 220 and slidably coupled to the first connection block 231. However, as described below, the first connection shaft 232 may be fixedly coupled to the first connection block 231 and slidably coupled to the first-direction movement member 220.

To absorb impact caused by the backward movement of the first-direction movement guide 210, the first elastic member 233 such as a spring is installed on the outer circumference of the first connection shaft 232. Both ends of the first elastic member 233 are regulated by a side of the first-direction movement member 220 and a side of the first connection block 231 that are opposite to each other with the first connection shaft 232 interposed therebetween. Therefore, for example, during the backward movement of the first connection block 231, the first elastic member 233 are pressurized against the opposite sides of the first-direction movement member 220 and the first connection block 231, thus causing the first connection block 231 to be flexibly moved (backward) relative to the vertical block 222 of the first-direction movement member 220 (see FIG. 4). In addition, the first elastic member 233 that is pressurized to contract provides a restoring force for the first connection block 231 to return to an original position thereof. For example, when pressure applied to the first-direction movement guide 210 due to the electrode lead L is canceled, the first connection block 231 returns (moves forward) to the original position thereof due to the restoring force from the first elastic member 233. For stable operation of the first elastic member 233, an end of the first elastic member 233 may be fixed to a side of the vertical block 222 and/or a side of the first connection block 231 opposite thereto. Referring to FIG. 3, a first elastic member mounting groove 222a is formed in a side of the vertical block 222 opposite to the first connection block 231, and an end of the first elastic member 233 is coupled to the first elastic member mounting groove 222a.

An operation of the first-direction movement guide backward movement device 230 of the alignment apparatus 1000 of the present embodiment will be described with reference to FIGS. 5 to 9 below.

A movement stroke of the first movement block 240 and the first-direction movement member 220 may be set in consideration of a size of the electrode lead L, the distance between the electrode lead L and the first-direction fixing guide 290, and the like. Because the electrode lead L is moved on the alignment support 100 and is stopped in contact with the first-direction fixing guide 290, the movement stroke may be the sum of the distance between of the electrode lead L and the first-direction movement guide 210, and the distance between the electrode lead L and the first-direction fixing guide 290. However, the size of the electrode lead L has a tolerance as described above. When the movement stroke is set in consideration of a medium-sized electrode lead L, the first-direction movement guide 210 connected to the first-direction movement member 220 may not reach a smaller-sized electrode lead L having a smaller size, thus making it difficult to align the smaller-sized electrode lead L. That is, the first-direction movement guide 210 should move forward enough to push the electrode lead L such that the electrode lead L may be stably supported (aligned) between the first-direction movement guide 210 and the first-direction fixing guide 290. In consideration of this point, a first-direction movement stroke of the first-direction movement member 220 is set to be equal to or greater than a forward movement distance of the first-direction movement guide 210 until the electrode lead L is aligned. That is, the forward movement distance of the first-direction movement guide 210 until the electrode lead L is aligned is set to be equal to or less than the set first-direction movement stroke of the first-direction movement member 220.

FIGS. 5 and 6 illustrate a case in which the forward movement distance of the first-direction movement guide 210 is equal to the first-direction movement stroke.

First, in FIG. 5, the first-direction movement member 220 moves forward according to the movement of the first movement block 240. Accordingly, the first-direction movement guide 210 connected to the first-direction movement member 220 is moved forward and comes into contact with the electrode lead L on the alignment support 100 (not shown in FIGS. 5 and 6) (see FIG. 6). When the first-direction movement member 220 continuously moves, the electrode lead L is pushed by the first-direction movement guide 210, and finally, the other side of the electrode lead L comes into contact with the first direction fixing guide 290 and thus the electrode lead L is stopped. That is, alignment of the electrode lead L in the first direction is completed in a state in which the electrode lead L is stopped while being inserted between the first-direction movement guide 210 and the first-direction fixing guide 290. Ideally, the movement of the first-direction movement member 220 ends when the forward movement of the first-direction movement guide 210 ends. That is, in this case, the movement stroke of the first-direction movement member 220 is the same as the forward movement distance of the first-direction movement guide 210 at the completion of alignment.

When the movement stroke of the first-direction movement member 220 is less than the forward movement distance of the first-direction movement guide 210 of FIG. 6, the movement of the first-direction movement guide 210 ends while the other side of the electrode lead L is not in contact with the first-direction fixing guide 290. In this case, the electrode lead L cannot be completely aligned in the first direction. Therefore, generally, the movement stroke of the first-direction movement member 220 is set to be equal to or greater than the forward movement distance of the first-direction movement guide 210 at the completion of alignment. However, when the electrode lead L has a tolerance as shown in FIG. 1, the first-direction movement member 220 continuously moves forward toward the electrode lead L even at the completion of alignment of the first-direction movement guide 210. In this case, the electrode lead L may be pressed against the first-direction movement guide 210 and thus be damaged.

FIGS. 7 to 9 illustrate an operation of the backward movement device 230 to prevent damage to the electrode lead L.

A length of the electrode lead L in the X-axis direction is greater by a tolerance d₁ than that of the electrode lead L of FIGS. 5 and 6.

Referring to FIG. 7, as the first-direction movement member 220 moves forward toward the electrode lead L, the first-direction movement guide 210 is also moved forward.

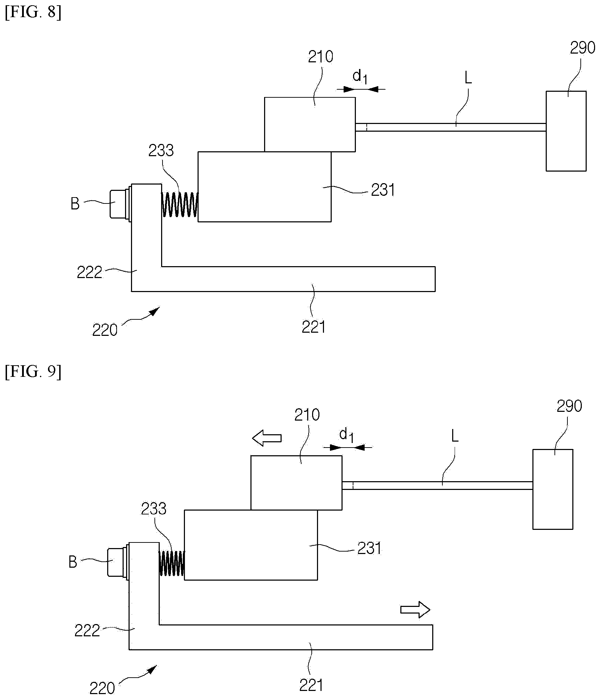

Referring to FIG. 8, the first-direction movement guide 210 pushes the electrode lead L against the first-direction fixing guide 290 to complete the alignment of the electrode lead L in the X-axis direction.

However, as shown in FIG. 9, the first-direction movement member 220 continuously moves forward until the set X-axis direction movement stroke is reached. In this case, the front end of the first-direction movement guide 210 and the electrode lead L are pressed against each other. When the backward movement device 230 is not provided, the electrode lead L may be damaged by the first-direction movement guide 210. However, as shown in FIG. 9, the first connection block 231 of the backward movement device 230 is coupled to the first-direction movement member 220 to be movable backward. Specifically, as the first-direction movement guide 210 is pressed by the electrode lead L, a backward-direction force is applied. Accordingly, the first connection block 231 coupled to the first-direction movement guide 210 is moved backward. In this case, the first connection shaft 232 slides into the insertion hole 231A-1 of the first connection block 231, and the first connection block 231 is stably moved backward toward the first-direction connection member (the vertical block 222) along the first connection shaft 232. As the first connection block 231 is moved backward, the first elastic member 233 installed on the side of the first connection block 231 is pressed to contract (see FIGS. 4 and 9). That is, as the first elastic member 233 is pressed by the vertical block 222 and the first connection block 231, pressure applied during the backward movement of the first connection block 231 is absorbed. Accordingly, contact pressure applied to a first side of the electrode lead L by the first-direction movement guide 210 decreases, thus preventing damage to the electrode lead L.

As shown in FIG. 9, the backward movement device 230 of the present invention gives a margin for moving the first-direction movement guide 210 backward. Therefore, even there is a tolerance d₁ in the size of the electrode lead L in the first direction, it can be easily handled. A backward movement distance of the first-direction movement guide 210 may be increased according to the tolerance d₁.

Although not shown in FIGS. 5 to 9, the first-direction movement guide 210 and the first connection block 231 may be gently guided by the second guide block 280 shown in FIGS. 2 to 4 to be moved backward relative to the first-direction movement guide 220.

In FIGS. 5 to 9, the movement stroke of the first-direction movement member 220 is set such that the first-direction movement guide 210 is moved until the first-direction movement guide 210 is aligned in contact with the first side of the electrode lead L. However, as described below, the movement stroke of the first-direction movement member 220 may be set to be large such that the first-direction movement guide 210 is moved to pass by the first side of the electrode lead L. However, the first-direction movement guide 210 is not actually moved to pass by the first side and is moved backward by the backward movement device 230 when the first-direction movement guide 210 comes into contact with the first side. In this case, regardless whether the electrode lead L has a tolerance, the backward movement device is always operated to move the first-direction movement guide 210 backward when alignment is completed. When the movement stroke is set to be large as described above, all electrode leads L can be stably aligned without taking into account whether the electrode leads L have a tolerance.

In the present embodiment, the electrode lead L is aligned by setting the first direction to be the X-axis direction. However, the electrode lead L may be aligned by setting the first direction to be the Y-axis direction.

Meanwhile, the electrode lead alignment apparatus 1000 may further include the second-direction alignment device 300.

In this case, the second-direction alignment device 300 may include a second-direction movement guide 21 that pushes the electrode lead L in the second direction to align the electrode lead L, and a second-direction fixing guide 22 installed opposite to the second-direction movement guide 21 with the alignment support 100 interposed therebetween. That is, the alignment apparatus 1000 of the present embodiment may include the second-direction alignment device 20 of the related art. However, in this case, a tolerance d₂ of the electrode lead L in the second direction (Y-axis direction) cannot be handled. Therefore, as shown in FIG. 1, a second side of the electrode lead L with the tolerance d₂ in the Y-axis direction may be damaged.

To prevent this problem, the electrode lead alignment apparatus 1000 of the present embodiment includes the second-direction alignment device 300 that includes a backward movement device 330.

Referring to FIGS. 2 and 10, the Y-axis direction alignment device 20 has substantially the same configuration as the X-axis direction alignment device 10 of the related art. That is, similarly, the Y-axis direction alignment device 300 includes a second-direction movement guide 310 that pushes the electrode lead L on the alignment support 100 in the second direction to align the electrode lead L, and a second-direction movement member 320 that moves by a set second-direction movement stroke in the second direction and is connected to the second-direction movement guide 310 to move the second-direction movement guide 310 in the second direction. The Y-axis direction alignment device 300 further includes the second-direction movement guide backward movement device 330 to move the second-direction movement guide 310 backward in a direction opposite to a direction in which the second-direction movement member 330 moves forward, when the electrode lead L is stopped due to the completion of the alignment thereof by the second-direction movement guide 310 during the forward movement of the second-direction movement member 320 in the second direction.

In this case, a forward movement distance of the second-direction movement guide 310 until the alignment of the electrode lead L is completed is equal to or less than the set second-direction movement stroke of the second-direction movement member 320.

The Y-axis direction alignment device 300 includes a second-direction movement device to move the second-direction movement member 320 in the second direction. A well-known linear movement device for linearly moving the second-direction movement member 320 in the second direction may be employed as the second-direction movement device. In the present embodiment, the linear movement device includes a driving source such as a motor, a second cylinder 341 connected to the driving source, and a second movement block 340 to be moved by the second cylinder 341.

The second-direction movement member 320 is fixedly coupled to an upper surface of the second movement block 340. In addition, a third guide block 350 is slidably coupled to a lower portion of the second movement block 340. The third guide block 350 guides the movement of the second movement block 340 in the second direction.

The second-direction movement guide backward movement device 330 includes a second connection block 331 connecting the second-direction movement guide 310 and the second-direction movement member 320. A side (upper surface) of the second connection block 331 is fixedly coupled to the second-direction movement guide 310, and another side of the second connection block 331 is slidably connected to the second-direction movement member 320.

The second-direction movement guide backward movement device 330 further includes: a second connection shaft 332 having one end fixedly coupled to one of the second-direction movement member 320 and the second connection block 331 and another end slidably coupled to the other, and extending in the second direction; and a second elastic member 333 that is installed on an outer circumference of the second connection shaft 332 and both ends of which are regulated by a side of the second-direction movement member 320 and a side of the second connection block 331.

The second-direction movement member 320 also includes a horizontal block 321 and a vertical block 322 to be connected to the second connection block 331.

One end of the second connection shaft 332 is fixedly coupled to the vertical block 322. Specifically, a through insertion hole 322-1 is formed in the vertical block 322, and a front end of the second connection shaft 332 is inserted into the through insertion hole 322-1. A fastening member B is fastened to the front end of the second connection shaft 332 from a side of the second connection shaft 332 opposite to the front end of the second connection shaft 332 to fixedly couple the second connection shaft 332 to the vertical block 322. For coupling with the fastening member B, a fastening member coupling hole may be provided in the front end of the second connection shaft 332. An insertion hole 331A-1 into which the second connection shaft 2332 is inserted is provided in a side of the second connection block 331 facing the vertical block 322. Another end of the second connection shaft 332 is slidably coupled to the insertion hole 331A-1. The second connection shaft 332 extends between the vertical block 322 and the second connection block 331 to connect the vertical block 322 and the second connection block 331. The insertion hole 331A-1 in the second connection block 331 has a length sufficient for the second connection shaft 332 to slide therein. That is, the length of the insertion hole 331A-1 may be set such that the other end of the second connection shaft 332 does not come into contact with a bottom surface of the insertion hole 331A-1 even when the second connection shaft 332 slides into the insertion hole 331A-1. A lower portion of the insertion hole 331A-1 may be provided with a hole expanded diameter part 331A-2 with a diameter greater than a diameter of the second connection shaft 332. In the present embodiment, the second connection shaft 332 is fixedly coupled to the second-direction movement member 320 and slidably coupled to the second connection block 331. However, the second connection shaft 332 may be fixedly coupled to the second connection block 331 and slidably coupled to the second-direction movement member 320.

For stable operation of the second elastic member 333, an end of the second elastic member 333 may be fixed to a side of the vertical block 322 and/or a side of the second connection block 331 opposite thereto. Referring to FIG. 10, a second elastic member mounting groove 322a is formed in a side of the vertical block 322 opposite to the second connection block 331, and an end of the second elastic member 333 is coupled to the second elastic member mounting groove 322a.

As described above, the second-direction (Y-axis direction) alignment device 300 also includes the backward movement device 330 similar to the first-direction alignment device 200 and thus the tolerance d₂ of the electrode lead L in the second direction can be handled.

According to the present embodiment, the electrode lead L can be reliably aligned in the first and second directions while effectively preventing damage to the first and second sides of the electrode lead L.

### (Second Embodiment)

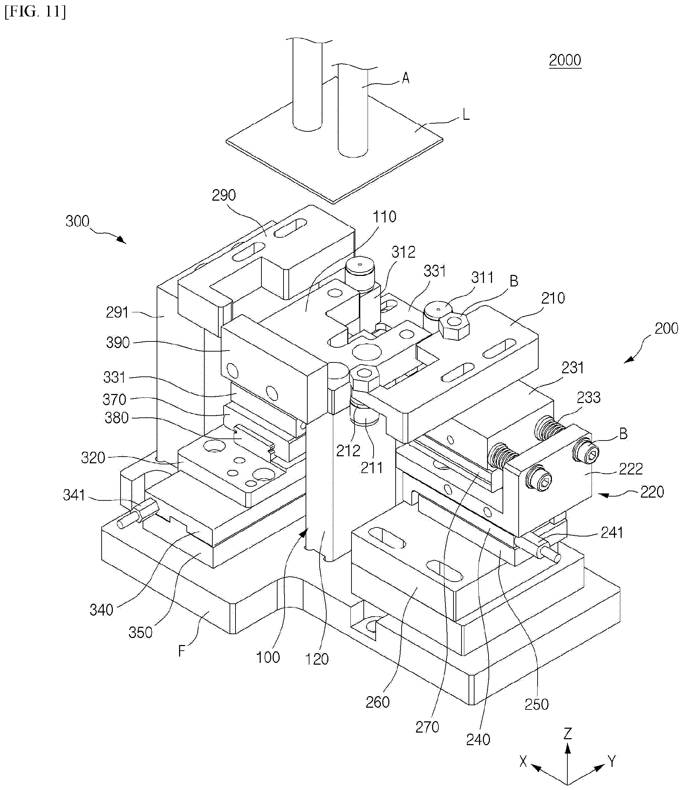

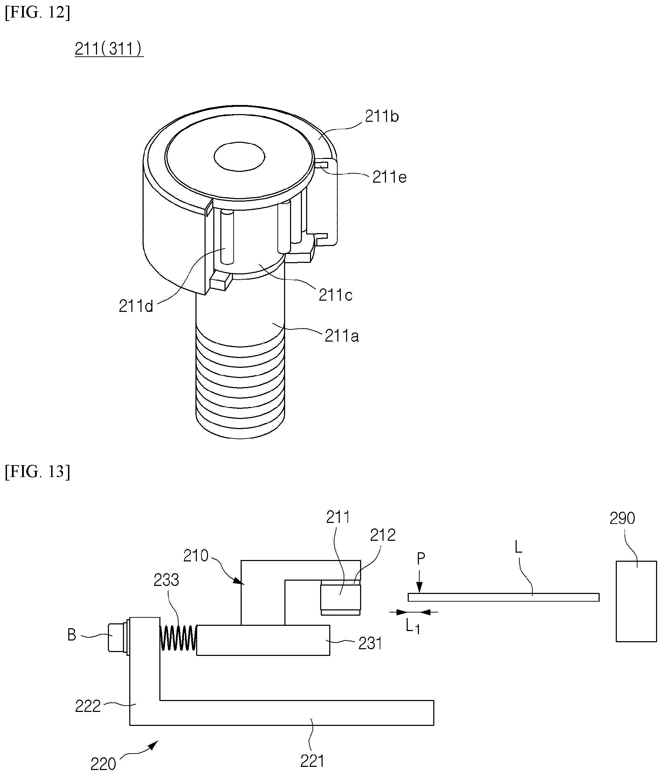

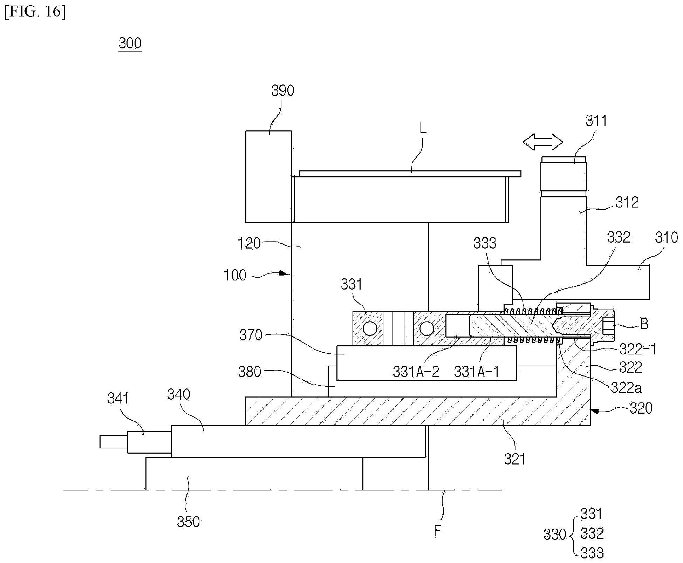

FIG. 11 is a perspective view of an electrode lead alignment apparatus of a second embodiment. FIG. 12 is a perspective view of an example of a guide roller included in the electrode lead alignment apparatus of the second embodiment. FIGS. 13 to 15 are schematic diagrams illustrating a process of aligning an electrode lead by the electrode lead alignment apparatus of the second embodiment. FIG. 16 is a side cross-sectional view of a Y-axis direction alignment device of the electrode lead alignment apparatus of the second embodiment.

An alignment apparatus 2000 of the second embodiment is characterized in that a first-direction alignment device 200 includes a first guide roller 211, in addition to a backward movement device.

As described above, when an entire end of a first-direction movement guide 210 is in contact (surface contact) with a first side of an electrode lead L, high surface pressure may be applied to the first side of the electrode lead L. In this case, even when the first-direction movement guide 210 is moved backward by a backward movement device 30, a contact area between the electrode lead L and the first-direction movement guide 210 is large and thus relatively high surface pressure may be applied to the first side of the electrode lead L.

In the present embodiment, the first guide roller 211 is installed at a part of the first-direction movement guide 210 in contact with the electrode lead L to disperse or alleviate the surface pressure.

As shown in FIG. 11, the first guide roller 211 that rotates about a rotation axis is provided on a front end of the first-direction movement guide 210. The first guide roller 211 may be, for example, a cam follower.

A basic structure of a cam follower is illustrated in FIG. 12. The cam follower is a shaft-attached bearing that is compact, has high rigidity, and is used as a cam device or a guide roller for linear movement because a needle roller 211d is assembled therein. Because an outer ring 211b of the cam follower rotates while in direct contact with a corresponding surface (the first side of the electrode lead L) and thus is designed to be large in thickness so as to withstand impact load. The needle roller 211d attached to a cage 211c is assembled inside the outer ring 211b to prevent skew, so that the outer ring 211b may sufficiently withstand high-speed rotation. The outer ring 211b comes into contact with the electrode lead L and aligns the electrode lead L in the first direction while rotating freely around a rotary shaft (stud) 211a. Reference numeral 211e that is not described here denotes a sealing member.

To support the rotation axis 211a of the first guide roller 211, the alignment apparatus 2000 of the present embodiment may include a shaft support part 212. The rotating shaft 211a may be fixedly coupled to the shaft support part 212, and the outer ring 211b of the cam follower may rotate on the shaft support part 212. In addition, the shaft support part 212 may be coupled to an end of the first-direction movement guide 210. By fastening the shaft support part 212 to the end of the first-direction movement guide 210 by the fastening member B, the first guide roller 211 may be coupled to the end of the first-direction movement guide 210.

A plurality of first guide rollers 211 may be disposed on an end of the first-direction movement guide 210. Referring to FIG. 11, a pair of first guide rollers 211 are installed at both sides of the front end of the first-direction movement guide 210 to alleviate surface pressure and stably guide the electrode lead L.

The outer ring 211b of the first guide roller 211 (cam follower) protrudes from the first-direction movement guide 210 to be in contact with the electrode lead L to align the electrode lead L.

The first guide roller 211 is not limited to a cam follower, and a different type of guide roller 211 may also be employed.

An operation of the alignment apparatus 2000 according to the present embodiment will be described with reference to FIGS. 13 to 15 below.

In the present embodiment, a first-direction movement stroke of the first-direction movement member 220 is set to be larger than that described above with reference to FIGS. 7 to 9. That is, the movement stroke of the first-direction movement member 220 is set such that the first-direction movement guide 210 moves to pass by the first side of the electrode lead L with no tolerance. That is, the first-direction movement stroke of the first-direction movement member 220 is set to a movement stroke allowing the first-direction movement guide 210 to move to a specific point P on the electrode lead L. That is, it should be understood to mean that the first-direction movement guide 210 moves to the point P due to the movement thereof the first-direction movement member 220 when the backward movement device 230 is not provided. Therefore, when the backward movement device 230 is not provided, the first-direction movement guide 210 is set to be further moved forward by a distance L₁ between the first side of the electrode lead L and the point P. In this case, regardless whether the electrode lead L has a tolerance, the backward movement device 30 is always operated to move the first-direction movement guide 210 backward when alignment is completed. When the movement stroke of the first-direction movement member 220 is set to be large as described above, all electrode leads L can be stably aligned without taking into account whether the electrode leads L have a tolerance. Because the first-direction movement guide 210 is set to be moved forward by the distance L₁ between the first side of the electrode lead L and the point P, the movement stroke of the first-direction movement member 220 increases by a distance L₁'. Accordingly, the first connection block 231 may be moved backward by a distance of L₁" as will be described below. The distances of L₁, L₁', and L₁" are the same or substantially the same.

Referring to FIG. 13, as the first-direction movement member 220 moves forward toward the electrode lead L, the first-direction movement guide 210 is also moved forward.

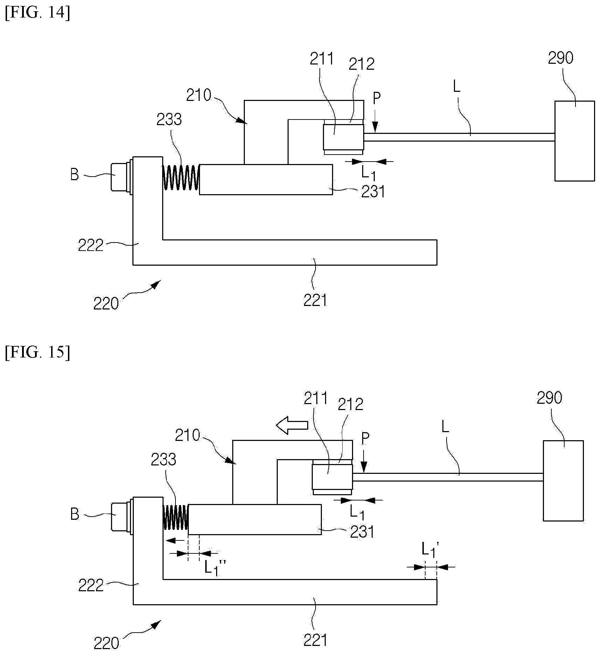

Referring to FIG. 14, the first-direction movement guide 210 pushes the electrode lead L against the first-direction fixing guide 290 to complete the alignment of the electrode lead L in the X-axis direction.

In this case, the movement stroke of the first-direction movement member 220 is set to be long enough for the first-direction movement guide 210 to move by the distance L₁ to the inside of the electrode lead L. However, as shown in FIG. 15, the first-direction movement member 220 continuously moves forward until the set X-axis direction movement stroke is reached. In this case, the front end of the first-direction movement guide 210 and the electrode lead L are pressed against each other. As the first-direction movement guide 210 is pressed by the electrode lead L, a backward-direction force is applied. Accordingly, the first connection block 231 coupled to the first-direction movement guide 210 is moved backward (see FIG. 15). In this case, the first connection shaft 232 slides into the insertion hole 231A-1 of the first connection block 231, and the first connection block 231 is stably moved backward toward the vertical block 222 of the first-direction connection member along the first connection shaft 232. As the first connection block 231 is moved backward, a first elastic member 233 installed on a side of the first connection block 231 is pressed to contract. That is, as the first elastic member 233 is pressed by the vertical block 222 and the first connection block 231, pressure applied during the backward movement of the first connection block 231 is absorbed. Accordingly, contact pressure applied to the first side of the electrode lead L by the first-direction movement guide 210 decreases, thus preventing damage to the electrode lead L.

In addition, the first-direction movement guide 210 and the first connection block 231 may be gently guided by the first guide block 250 to be moved backward relative to the first-direction movement member 220.

According to the present embodiment, the tolerance of the electrode lead L may be handled by the first-direction movement guide backward movement device 230 to prevent damage to the electrode lead L.

In addition, damage to the electrode lead L may be more reliably prevented by the first guide roller 211.

Similarly, the alignment apparatus 2000 may further include a second-direction alignment device 300.

The second-direction alignment device 300 may include a movement guide and a fixing guide without a backward movement device, as in the related art.

However, in this case, a second side of the electrode lead L may be damaged. Therefore, as shown in FIG. 16, a second-direction movement guide backward movement device 330 is installed in a second-direction alignment device 300 as described above with respect to the first embodiment. Thus, the electrode lead L can be protected by handling both size tolerances thereof in the X-axis direction and the Y-axis direction.

In addition, the second-direction movement guide 310 may also include a second guide roller 311 that rotating around the rotation axis and comes into contact with the electrode lead L to align the electrode lead L in the second-direction. The second guide roller 311 may be a cam follower.

To support a rotation axis of the second guide roller 311, the alignment apparatus 2000 of the present embodiment may include a shaft support part 312. The shaft support part 312 may be coupled to an end of the second-direction movement guide 310.

Accordingly, the second-direction alignment device 300 may also prevent damage to the electrode lead L by handling a tolerance d₂ of the electrode lead L using the second-direction movement guide backward movement device 330. In addition, damage to the electrode lead L may be more reliably prevented by the second guide roller 311.

Although not shown, the second-direction alignment device 300 may include only the second-direction movement guide 310, which includes the second guide roller 311 without the backward movement device 330.

### (Third Embodiment)

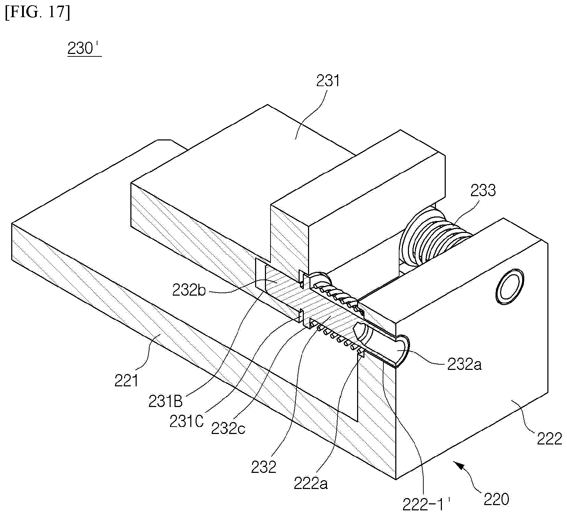

FIG. 17 is a schematic perspective view of a modified example of a backward movement device of an electrode lead alignment apparatus of the present invention.

In the alignment apparatuses of the first and second embodiments, the first connection shaft 232 of the backward movement device 230 is fixedly coupled to the first-direction movement member 220 and is slidably coupled to the first connection block 231.

In a backward movement device 230' of the present modified example, a first connection shaft 232 is fixedly coupled to a first connection block 231 and slidably coupled to a first-direction movement member 220.

The first-direction movement member 220 includes a horizontal block 221 connected to a lower surface of the first connection block 231 and a vertical block 222 coupled to the first connection shaft 232. A second guide block (not shown) is fixedly coupled to an upper surface of the horizontal block 221, and the first connection block 231 is slidably coupled to an upper surface of the second guide block.

The vertical block 222 is provided with a through insertion hole 222-1', and another end 232a of the first connection shaft 232 is slidably coupled to the vertical block 222 through the through insertion hole 221-1'.

An insertion hole 231B into which one end 232b of the first connection shaft 232 is inserted is provided in a side of the first connection block 231 facing the vertical block 222. The end 232b of the first connection shaft 232 is fixedly coupled to the insertion hole 231B. The first connection shaft 232 extends between the vertical block 222 and the first connection block 231 to connect the vertical block 222 and the first connection block 231.

To absorb impact caused by a backward movement of the first-direction movement guide 210, a first elastic member 233 such as a spring is installed on an outer circumference of the first connection shaft 232. Both ends of the first elastic member 233 are regulated by a side of the first-direction movement member 220 and a side of the first connection block 231 that are opposite to each other with the first connection shaft 232 interposed therebetween. Therefore, for example, the first elastic member 233 is pressed against the opposite sides of the first-direction movement member 220 and the first connection block 231 when the first connection block 231 is moved backward. Accordingly, the first connection block 231 may be moved flexibly relative to the vertical block 222 of the first-direction movement member 220. For stable operation of the first elastic member 233, an end of the first elastic member 233 may be fixed to a side of the vertical block 222 and/or a side of the first connection block 231 opposite thereto. Referring to FIG. 17, a first elastic member mounting groove 222a is formed in an inner side of the vertical block 222 opposite to the first connection block 231, and an end of the first elastic member 233 is coupled to the first elastic member mounting groove 222a. Meanwhile, a connection shaft expanded diameter part 232c may be provided on the outer circumference of the first connection shaft 232 to press the first elastic member 233. In addition, an installation groove 231C in which the connection shaft expanded diameter part 232c is mounted is provided on a side of the first connection block 231. The first connection shaft 232 is mounted by inserting the end 232b thereof into the insertion hole 231B of the first connection block 231, and is also fixedly coupled to the first connection block 231 such that the connection shaft expanded diameter part 232c is mounted in the insertion hole 231C of the first connection block 231. The first elastic member 233 may be pressed by the connection shaft expanded diameter part 232c.

As described above, an electrode lead alignment apparatus according to the present invention is capable of aligning various sized electrode leads in the first direction and/or the second direction while preventing damage to the electrode leads.

Although example embodiments of the present invention have been illustrated and described above, it will be obvious to those of ordinary skill in the art that various modifications and changes may be made without departing from the technical scope and idea of the present invention defined in the appended claims.

### (Reference Numerals)

A: adsorber
L: electrode lead
100: alignment support
110: alignment support part
120: support frame
200: first-direction alignment device
210: first-direction movement guide
220: first-direction movement member
230: first-direction movement guide backward movement device
231: first connection block
232: first connection shaft
233: first elastic member
240: first movement block
250: first guide block
260: support block
270: sliding block
280: second guide block
290: first-direction fixing guide
291: guide support frame
300: second-direction alignment device
310: second-direction movement guide
320: second-direction movement member
330: second-direction movement guide backward movement device
331: second connection block
332: second connection shaft
333: second elastic member
340: second movement block
350: third guide block
370: sliding block
380: fourth guide block
390: first-direction fixing guide
B: fastening member
F: base frame

## Claims

1. An electrode lead alignment apparatus for manufacturing a battery, comprising:
an alignment support configured to place an electrode lead thereon;
a first-direction movement guide configured to push the electrode lead on the alignment support in a first direction to align the electrode lead;
a first-direction movement member configured to be moved by a set first-direction movement stroke in the first direction, and connected to the first-direction movement guide to move the first-direction movement guide in the first direction; and
a first-direction movement guide backward movement device configured to move the first-direction movement guide backward in a direction opposite in a direction in which the first-direction movement member is moved forward, when the electrode lead is stopped due to completion of alignment of the electrode lead by the first-direction movement guide during forward movement of the first-direction movement member in the first direction.

2. The electrode lead alignment apparatus of claim 1, wherein a forward movement distance of the first-direction movement guide until the alignment of the electrode lead is completed is equal to or less than the set first-direction movement stroke of the first-direction movement member.

3. The electrode lead alignment apparatus of claim 1, further comprising a first-direction movement device configured to move in the first direction, and including a first movement block fixedly coupled to a lower portion of the first-direction movement member to move the first-direction movement member in the first direction.

4. The electrode lead alignment apparatus of claim 3, further comprising a first guide block slidably coupled to a lower portion of the first movement block to guide movement of the first movement block in the first direction.

5. The electrode lead alignment apparatus of claim 1, wherein the first-direction movement guide backward movement device comprises a first connection block configured to connect the first-direction movement guide and the first-direction movement member,
wherein one side of the first connection block is fixedly coupled to the first-direction movement guide, and another side thereof is slidably coupled to the first-direction movement member.

6. The electrode lead alignment apparatus of claim 5, wherein the first-direction movement guide backward movement device further comprises:
a first connection shaft including one end fixedly coupled to one of the first-direction movement member and the first connection block and another end slidably coupled to the other, the first connection shaft extending in the first direction; and
a first elastic member installed on an outer circumference of the first connection shaft, wherein both ends of the first elastic member are regulated by a side of the first-direction movement member and a side of the first connection block that are opposite to each other with the first connection shaft interposed therebetween.

7. The electrode lead alignment apparatus of claim 6, further comprising a second guide block fixedly coupled to the first-direction movement member and slidably coupled to the first connection block to guide movement of the first connection block in the first direction.

8. The electrode lead alignment apparatus of claim 1, wherein the first-direction movement guide comprises a first guide roller configured to rotate around a rotation axis and come into contact with the electrode lead to align the electrode lead in the first direction.

9. The electrode lead alignment apparatus of any one of claims 1 to 8, further comprising:
a second-direction movement guide configured to push the electrode lead on the alignment support in a second direction to align the electrode lead; and
a second-direction movement member configured to be moved by a set second-direction movement stroke in a second direction, and connected to the second-direction movement guide to move the second-direction movement guide in the second direction.

10. The electrode lead alignment apparatus of claim 9, further comprising a second-direction movement guide backward movement device configured to move the second-direction movement guide backward in a direction opposite in a direction in which the second-direction movement member is moved forward, when the electrode lead is stopped due to completion of alignment of the electrode lead by the second-direction movement guide during forward movement of the second-direction movement member in the second direction.

11. The electrode lead alignment apparatus of claim 10, wherein a forward movement distance of the second-direction movement guide until the alignment of the electrode lead is completed is equal to or less than the set second-direction movement stroke of the second-direction movement member.

12. The electrode lead alignment apparatus of claim 10, further comprising:
a second-direction movement device configured to be moved in the second direction, and including a second movement block fixedly coupled to a lower portion of the second-direction movement member to move the second-direction movement member in the second direction; and
a third guide block slidably coupled to a lower portion of the second movement block to guide movement of the second movement block in the second direction.

13. The electrode lead alignment apparatus of claim 10, wherein the second-direction movement guide backward movement device comprises a second connection block configured to connect the second-direction movement guide and the second-direction movement member,
wherein one side of the second connection block is fixedly coupled to the second-direction movement guide, and another side thereof is slidably coupled to the second-direction movement member.

14. The electrode lead alignment apparatus of claim 13, wherein the second-direction movement guide backward movement device further comprises:
a second connection shaft including one end fixedly coupled to one of the second-direction movement member and the second connection block and another end slidably coupled to the other, the second connection shaft extending in the second direction; and
a second elastic member installed on an outer circumference of the second connection shaft, wherein both ends of the second elastic member are regulated by a side of the second-direction movement member and a side of the second connection block that are opposite to each other with the second connection shaft interposed therebetween.

15. The electrode lead alignment apparatus of claim 10, wherein the second-direction movement guide comprises a second guide roller configured to rotate around the rotation axis and come into contact with the electrode lead to align the electrode lead in the second direction.
